**Europäisches Patentamt**

**European Patent Office**

**Office européen des brevets**

(19)

(11) Veröffentlichungsnummer: **0 122 492**
**B1**

(12) **EUROPÄISCHE PATENTSCHRIFT**

(45) Veröffentlichungstag der Patentschrift:
08.02.89

(51) Int. Cl.⁴: **H 02 H 7/12**

(21) Anmeldenummer: **84103012.5**

(22) Anmeldetag: **19.03.84**

(54) Anlaufschaltung für ein Schaltnetzteil.

(30) Priorität: **22.03.83 DE 3310380**

(43) Veröffentlichungstag der Anmeldung:
**24.10.84 Patentblatt 84/43**

(45) Bekanntmachung des Hinweises auf die Patenterteilung:
**08.02.89 Patentblatt 89/6**

(84) Benannte Vertragsstaaten:
**AT BE DE FR GB IT NL**

(56) Entgegenhaltungen:
**GB-A- 2 139 436**
**US-A- 4 233 557**
**US-A- 4 288 831**

(73) Patentinhaber: **Siemens Aktiengesellschaft Berlin und München, Wittelsbacherplatz 2, D-8000 München 2 (DE)**

(72) Erfinder: **Schlenk, Manfred, Dipl.-Ing., Ostpreussenstrasse 14, D-8903 Bobingen (DE)**

EP 0 122 492 B1

**Beschreibung**

Die Erfindung betrifft eine Anlaufschaltung für ein Schaltnetzteil mit einer Unterspannungsüberwachung und einem Pulsbreitenmodulator als Regelteil, der mindestens einen Softstarteingang und einen Freigabeeingang besitzt.

Schaltnetzteile besitzen in der Regel eine Überwachungseinheit, die bei Unterschreiten eines bestimmten Wertes der Ausgangsspannung über eine Steuer- und Regeleinheit das Netzteil abschaltet. Um den Anlaufvorgang des Netzteils zu ermöglichen, muss gleichzeitig mit dem Einschaltbefehl diese Unterspannungsüberwachung ausser Kraft gesetzt werden.

Dies geschieht in üblicher Weise so, dass mit dem Einschaltbefehl eine monostabile Kippstufe gestartet wird, die die Unterspannungsüberwachung ausser Kraft setzt und somit die Steuer- und Regeleinheit des Netzteiles freigibt. Nach Ablauf einer durch die Beschaltung der monostabilen Kippstufe bestimmten Zeit wird die Unterspannungsüberwachung wieder zugeschaltet. Der Nachteil dieses Prinzips liegt neben der hohen Störanfälligkeit von monostabilen Kippstufen darin, dass die Zeitkonstanten von monostabiler Kippstufe und Softstartkreis sehr genau aufeinander abgestimmt werden müssen, um einen sicheren Anlauf des Netzteiles zu gewährleisten.

Aufgabe der vorliegenden Erfindung ist es, eine Anlaufschaltung für ein Schaltnetzteil mit einer Unterspannungsüberwachung und einem Pulsbreitenmodulator als Regelteil zu schaffen, die die Unterspannungsüberwachung während des Einschaltvorganges des Schaltnetzteiles mit einfachen Massnahmen ausser Betrieb setzt.

Zur Lösung dieser Aufgabe wird gemäss der Erfindung die Anlaufschaltung für ein Schaltnetzteil derart ausgebildet, dass die Ausgänge zweier Komparatoren über ein NAND-Gatter mit dem Freigabeeingang des Pulsbreitenmodulators verbunden sind, dass die Komparatoren je zwei Eingänge aufweisen, dass an dem ersten Eingang des ersten Komparators ein über einen ohmschen Widerstand aufladbarer Kondensator liegt, dem ein steuerbarer elektronischer Schalter parallel geschaltet ist, und an dessen zweitem Eingang eine erste Referenzspannung und an dem ersten Eingang des zweiten Komparators eine zweite Referenzspannung, die gleich oder kleiner ist als die erste Referenzspannung, und an dessen zweitem Eingang die Ausgangsspannung des Schaltnetzteils liegt, dass die am Kondensator erzeugte Spannung über einen vorgespannten Gleichrichter, dessen Vorspannung gleich oder kleiner der ersten Referenzspannung ist, an den Softstarteingang des Pulsbreitenmodulators geführt ist, dass eine Steuerschaltung mit einem Eingang für Einschaltbefehle und mit einem Eingang für Ausschaltbefehle ausgangsseitig mit dem Steuereingang des elektronischen Schalters und der Freigabeeingang des Pulsbreitenmodulators mit dem Eingang für Ausschaltbefehle verbunden ist.

Durch diese Massnahmen wird die schwierige Abstimmung von Zeitkonstanten unterschiedlicher Schaltkreise aufeinander vermieden.

Der steuerbare elektronische Schalter kann dabei vorteilhafterweise ein Transistor mit einem im Kollektorkreis liegenden ohmschen Widerstand sein. Die Vorspannung des Gleichrichters lässt sich in einfacher Weise über einen Spannungsteiler einstellen.

Anhand des Ausführungsbeispieles wird die Erfindung näher erläutert.

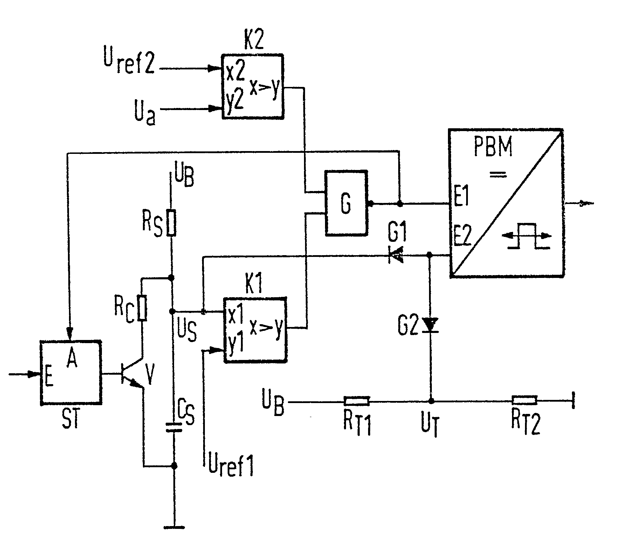

Die Figur zeigt den Regelteil und die Anlaufschaltung für ein Schaltnetzteil. Der Regelteil besteht dabei aus dem Pulsbreitenmodulator PBM, der zwei Eingänge E1, E2, aufweist. Der Eingang E2 ist der sogenannte Softstarteingang, der ein weiches «Anlaufen» des gesamten Netzschaltteiles dadurch gewährleistet, dass eine langsam an diesem Eingang grösser werdende Gleichspannung das Pulsbreitenverhältnis des Pulsbreitenmodulators und damit die Ausgangsspannung $U_a$ des gesamten Netzteils langsam verändert.

Der weitere Eingang E1 ist der sogenannte Freigabeeingang, bei dem durch Anlegen bestimmter Signale ein Freigeben oder Sperren des gesamten Netzteils erreicht wird.

Dieser Freigabeeingang ist mit dem Ausgang des NAND-Gatters G verbunden, dessen beide Eingänge mit den Ausgängen zweier Komparatoren K1, K2 verbunden sind. Dem ersten Komparator wird an seinem X-Eingang eine am Kondensator $C_S$ erzeugbare Spannung $U_S$ zugeführt, während an seinem y-Eingang die Spannung $U_{ref1}$ anliegt. Der Komparator K2 hat an seinem x-Eingang ebenfalls eine Referenzspannung $U_{ref2}$ anliegen, während am y-Eingang die Ausgangsspannung $U_a$ des Schaltnetzteiles zugeführt wird. Parallel zum Kondensator $C_S$ liegt der Transistor V mit einem im Kollektorkreis liegenden Widerstand $R_C$. Der Transistor V wird an seiner Basis von einer Steuerschaltung ST angesteuert, an deren Eingang die Einschaltbefehle zugeführt werden. Gleichzeitig ist vom Freigabeeingang E1 eine Verbindung zu dem für die Zuführung von Ausschaltbefehlen zuständigen Eingang vorgesehen.

Die Funktionsweise der Schaltung wird nunmehr anschliessend erläutert.

Abhängig von der Höhe der Gleichspannung am Softstarteingang E2 des Pulsbreitenmodulators PBM wird das Tastverhältnis des Schaltnetzteils verändert und somit die Ausgangsspannung des Schaltnetzteils. Das maximale Tastverhältnis wird über den Widerstandsteiler $R_{T1}$, $R_{T2}$ festgelegt. Um einen sicheren Anlauf des Schaltnetzteils zu gewährleisten, muss daher die erste Referenzspannung $U_{ref1} \geq U_T$ gewählt werden. Über den Freigabeeingang E1 ist der Pulsbreitenmodulator freigegeben. Wird mit einem Einschaltbefehl über die Steuerschaltung ST der Transistor V gesperrt, so beginnt entsprechend der Zeitkonstante $R_S \cdot C_S$ die Spannung am Eingang E2 zu steigen und damit die Ausgangsspannung des Schaltnetzteils. Überschreitet die Spannung am Kondensator $C_S$ den Wert $U_{ref1}$, so nimmt der Ausgang des Komparators H-Pegel an und schaltet damit über das NAND-Gatter G den Komparator K1 für die Unterspannungsüberwachung an den Freigabeeingang der Steuer- und Regeleinheit. Lag während des Hochlaufvorganges der Ausgangsspannung $U_a$ kein Fehler des Netzteils vor, so hat mittlerweile die Ausgangsspannung $U_a$ den Wert $U_{ref2}$ überschritten und der Ausgang des Komparators K2 L-Pegel angenommen. Der Pulsbreitenmodulator bleibt eingeschaltet. Sollte die Ausgangsspannung $U_a$ – beispielsweise durch Kurzschluss – den Wert $U_{ref2}$ nicht erreicht haben, so bleibt der H-Pegel am Ausgang des zweiten Komparators K2 erhalten, der Pulsbreitenmodulator wird dann über den Freigabeeingang E1 gesperrt, und die Steuerschaltung (ST) zurückgesetzt.

Je nach Ausbildung des Gatters G kann die Schaltung an die unterschiedlichen Typen von Pulsbreitenmodulatoren angepasst werden. Die erste Referenzspannung $U_{ref1}$ muss dabei immer grösser als oder gleich gross sein wie die zweite Referenzspannung $U_{ref2}$.

**Patentansprüche**

1. Anlaufschaltung für ein Schaltnetzteil mit einer Unterspannungsüberwachung und einem Pulsbreitenmodulator (PBM) als Regelteil, der mindestens einen Softstarteingang (E2) und einen Freigabeeingang (E1) besitzt, dadurch gekennzeichnet, dass die Ausgänge zweier Komparatoren (K1, K2) über ein NAND-Gatter (G) mit dem Freigabeeingang (E1) des Pulsbreitenmodulators (PBM) verbunden sind, dass die Komparatoren je zwei Eingänge (x1, y1; x2, y2) aufweisen, dass an dem ersten Eingang (x1) des ersten Komparators (K1) ein über einen ohmschen Widerstand ($R_S$) aufladbarer Kondensator ($C_S$) liegt, dem ein steuerbarer elektronischer Schalter (V, $R_C$) parallel geschaltet ist, und an dessen zweitem Eingang (y1) eine erste Referenzspannung ($U_{ref1}$) und an dem ersten Eingang (x2) des zweiten Komparators (K2) eine zweite Referenzspannung ($U_{ref2}$), die gleich oder kleiner ist als die erste Referenzspannung ($U_{ref1}$), und an dessen zweitem Eingang (y2) die Ausgangsspannung ($U_a$) des Schaltnetzteils liegt, dass die am Kondensator ($C_S$) erzeugte Spannung über einen vorgespannten Gleichrichter (G1, G2), dessen Vorspannung ($U_T$) gleich oder kleiner der ersten Referenzspannung ($U_{ref1}$) ist, an den Softstarteingang (E2) des Pulsbreitenmodulators (PBM) geführt ist, dass eine Steuerschaltung (ST) mit einem Eingang (E) für Einschaltbefehle und mit einem Eingang (A) für Ausschaltbefehle ausgangsseitig mit dem Steuereingang des elektronischen Schalters (V, $R_C$) und der Freigabeeingang (E1) des Pulsbreitenmodulators (PBM) mit dem Eingang (A) für Ausschaltbefehle verbunden ist.

2. Anlaufschaltung nach Anspruch 1, dadurch gekennzeichnet, dass der steuerbare elektronische Schalter ein Transistor (V) mit einem im Kollektorkreis liegendem ohmschen Widerstand ($R_C$) ist.

3. Anlaufschaltung nach Anspruch 1, dadurch gekennzeichnet, dass die Vorspannung des Gleichrichters (G1, G2) über einen Spannungsteiler ($R_{T1}$, $R_{T2}$) einstellbar ist.

**Claims**

1. Starting circuit for a switched-mode power supply with an undervoltage monitoring circuit and a pulse width modulator (PBM) as the regulating section which has at least one soft start input (E2) and an enable input (E1), characterized in that the outputs of two comparators (K1, K2) are connected via a NAND gate (G) to the enable input (E1) of the pulse width modulator (PBM), that the comparators each exhibit two inputs (x1, y1; x2, y2), that at the first input (x1) of the first comparator (K1) a capacitor ($C_S$) is located, which can be charged up via an ohmic resistance ($R_S$), and which is connected in parallel with a controllable electronic switch (V, $R_C$), that at the second input (y1) of the first comparator (K1) a first reference voltage ($U_{ref1}$) and at the first input (x2) of the second comparator (K2) a second reference voltage ($U_{ref2}$), which is equal to or less than the first reference voltage ($U_{ref1}$) is present, that at the second input (y2) of the second comparator (K2) the output voltage ($U_a$) of the switched-mode power supply is present, that the voltage generated across the capacitor ($C_S$) via a biased rectifier (G1, G2), the bias voltage ($U_T$) of which is equal to or less than the first reference voltage ($U_{ref1}$), is connected to the soft start input (E2) of the pulse width modulator (PBM), that a control circuit (ST) with an input (E) for switch-on commands and with an input (A) for switch-off commands is connected on the output side to the control input of the electronic switch (V, $R_C$) and the enable input (E1) of the pulse width modulator (PBM) is connected to the input (A) for switch-off commands.

2. Starting circuit according to Claim 1, characterized in that the controllable electronic switch is a transistor (V) with an ohmic resistance ($R_C$) which is located in the collector circuit.

3. Starting circuit according to Claim 1, characterized in that the bias voltage of the rectifier (G1, G2) can be adjusted via a voltage divider ($R_{T1}$, $R_{T2}$).

**Revendications**

1. Circuit de démarrage pour un bloc d'alimentation réseau commuté comportant un dispositif de contrôle de l'état de sous-tension et un modulateur d'impulsions en durée (PBM) en tant que partie de régulation, qui possède au moins une entrée de démarrage doux (E2) et une entrée d'autorisation (E1), caractérisé par le fait que les sorties de deux comparateurs (K1, K2) sont reliées par l'intermédiaire d'une porte NON-ET (G) à l'entrée d'autorisation (E1) du modulateur d'impulsions en durée (PBM), que les comparateurs possèdent chacun deux entrées (x1, y1; x2, y2), qu'un condensateur ($C_S$), qui peut être chargé par l'intermédiaire d'une résistance ohmique ($R_S$) et en parallèle avec lequel est branché un interrupteur électronique commandable (V, $R_C$), est raccordé à la première entrée (x1) du premier comparateur (K1) et une première tension de référence ($U_{ref1}$) est appliquée à la seconde entrée (y1) du premier comparateur, et qu'une seconde tension de référence ($U_{ref2}$), qui est égale ou inférieure à la première tension de référence ($U_{ref1}$), est appliquée à la première entrée (x2) du comparateur (K2) et la tension de sortie ($U_a$) du bloc d'alimentation réseau commuté est appliquée à la seconde entrée (y2) du second comparateur, que la tension produite aux bornes du condensateur ($C_S$) est envoyée à l'entrée de démarrage doux (E2) du modulateur d'impulsions en durée (PBM) par l'intermédiaire d'un redresseur (G1, G2) alimenté par une tension de polarisation ($U_T$) égale ou inférieure à la première tension de référence ($U_{ref1}$), qu'un circuit de commande (ST) comportant une entrée (E) pour des instructions de branchement et une entrée (A) pour des instructions de débranchement est reliée, côté sortie, à l'entrée de commande de l'interrupteur électronique (V, $R_C$) et que l'entrée de libération (E1) du modulateur d'impulsions en durée (PBM) est reliée à l'entrée (A) pour les instructions de débranchement.

2. Circuit de démarrage suivant la revendication 1, caractérisé par le fait que l'interrupteur électronique commandable est un transistor (V) possédant une résistance ohmique ($R_C$) située dans son circuit de collecteur.

3. Circuit de démarrage suivant la revendication 1, caractérisé par le fait que la tension de polarisation du redresseur (G1, G2) est réglable par l'intermédiaire d'un diviseur de tension ($R_{T1}$, $R_{T2}$).